# EUROPEAN PATENT APPLICATION

(11) **EP 4 606 545 A1**
(43) Date of publication of application: **27.08.2025**
(21) Application number: 23879750.0
(22) Date of filing: 16.10.2023
(51) Int. Cl.: B29C 44/00, B29C 44/50, B29C 48/32, B29C 49/04, C08J 9/12, B29K 23/00, B29L 23/00

(54) **FOAMED MOLDED BODY MANUFACTURING METHOD**

(30) Priority: 21.10.2022 JP 2022169490
(71) Applicant: KYORAKU CO., LTD., Kyoto-shi, Kyoto 602-0912 (JP)
(72) Inventor: TANJI, Tadatoshi, Yamato-shi, Kanagawa 242-0018 (JP); OZAKI, Kunimasa, Yamato-shi, Kanagawa 242-0018 (JP); MINAMIGAWA, Yuta, Yamato-shi, Kanagawa 242-0018 (JP)
(74) Representative: Gulde & Partner
(86) International application number: PCT/JP2023/037371
(87) International publication number: WO 2024/085107

(57) **Abstract**

Provided is a manufacturing method for a foamed molded body that can improve the mass production efficiency of polyethylene-based foamed molded products with high expansion ratio. According to the present invention, there is provided a method for manufacturing a foamed molded body wherein the foamed molded body has an expansion ratio of 2.0 or more; the method comprises a feeding step, a parison forming step, and a molding step; in the feeding step, raw material resin is fed into an internal space of a cylinder of an extruder through a hopper; in the parison forming step, a foamed parison is formed by extruding, from a head, a foaming agent-containing resin in a molten state obtained by melt-kneading the raw material resin and a foaming agent in the internal space; in the molding step, the foamed parison is molded using a mold to form a foamed molded body; the raw material resin comprises 50 mass% or more of a polyethylene-based resin; the raw material resin comprises a pulverized material produced by pulverizing a foamed body using a pulverizer; the foamed body is composed of a resin comprising 50 mass% or more of a polyethylene-based resin and has an expansion ratio of 2.0 or more; the pulverizer is configured to discharge the pulverized material from the pulverizer through an opening provided in a screen mesh; and a diameter of the opening is 8.0 mm or less.

## Description

### [Technical Field]

The present invention relates to a method for manufacturing a foamed molded body.

### [Background Art]

For example, in air conditioning systems for automobiles, etc., tubular air conditioning ducts are used to ventilate air.

As an air conditioning duct, a foamed molded body made of foamed resin made by foaming a thermoplastic resin with a foaming agent is known. Demand for foamed molded bodies is expanding because they can simultaneously achieve high insulation properties and light weight.

A widely known manufacturing method for such foamed molded bodies is foam blow molding, in which molten foamed resin is clamped in split molds and air is blown into an interior of the molten foamed resin to inflate it (for example, PTL 1).

### [Citation List]

### [Patent Literature]

[PTL 1] JP 2017-064932 A

### [Summary of Invention]

### [Technical Problem]

In foam blow molding, raw material resin and a foaming agent are melt-kneaded in an extruder to obtain a foaming agent-containing resin in a molten state, and the obtained foaming agent-containing resin is extruded from a head to form a foamed parison, which is then molded using a mold to obtain a foamed molded body. Next, the foamed molded body is subjected to post-processing such as removal of a burr and a bag portion to obtain a foamed molded product that is a desired product.

The removed portion is usually pulverized in a pulverizer to become a pulverized material. The pulverized material is fed into an extruder and used to manufacture a next foamed molded body.

During development of mass production equipment for polyethylene-based foamed molded products with high expansion ratio, it was discovered that the pulverized material frequently clogged a hopper of the extruder, resulting in low mass production efficiency.

The present invention was made in consideration of these circumstances, and provides a method for manufacturing a foamed molded body that can improve the mass production efficiency of polyethylene-based foamed molded products with high expansion ratio.

### [Solution to Problem]

The present invention provides the following inventions.
[1] (First Aspect) A method for manufacturing a foamed molded body, wherein the foamed molded body has an expansion ratio of 2.0 or more;
   the method comprises a feeding step, a parison forming step, and a molding step;
   in the feeding step, raw material resin is fed into an internal space of a cylinder of an extruder through a hopper;
   in the parison forming step, a foamed parison is formed by extruding, from a head, a foaming agent-containing resin in a molten state obtained by melt-kneading the raw material resin and a foaming agent in the internal space;
   in the molding step, the foamed parison is molded using a mold to form a foamed molded body;
   the raw material resin comprises 50 mass% or more of a polyethylene-based resin;
   the raw material resin comprises a pulverized material produced by pulverizing a foamed body using a pulverizer;
   the foamed body is composed of a resin comprising 50 mass% or more of a polyethylene-based resin and has an expansion ratio of 2.0 or more;
   the pulverizer is configured to discharge the pulverized material from the pulverizer through an opening provided in a screen mesh; and
   a diameter of the opening is 8.0 mm or less.
   In the mass production of foamed molded products, it is common practice to utilize pulverized material. In the mass production of polypropylene-based foamed molded products or polyethylene-based foamed molded products with a low expansion ratio, the phenomenon of pulverized material clogging the hopper did not occur. Therefore, the phenomenon of pulverized material being prone to clogging the hopper is a phenomenon specific to the mass production of polyethylene-based foamed molded products. Through diligent investigation to solve this problem, it was discovered that by setting the diameter of the hole size of the screen mesh provided at the outlet of the pulverizer to 8.0 mm or less, the occurrence of clogging of the pulverized material in the hopper can be suppressed, leading to the completion of the present invention.
[2] The method of [1], wherein
   the expansion ratios of the foamed molded body and the foamed body are each 3.2 or more.
[3] The method of [1] or [2], wherein
   the head comprises a die core and a die shell surrounding the die core;
   the foamed parison is formed by the foaming agent-containing resin flowing through a flow path between the die core and the die shell and being extruded from the head through an annular slit;
   in a tip area within a range of 20 mm in a vertical direction from the annular slit, the die core and the die shell have a die core side flow path forming surface and a die shell side flow path forming surface, respectively; and
   an angle between the die core side flow path forming surface and the die shell side flow path forming surface is 3.0 degrees or more.
[4] (Second Aspect) A method for manufacturing a foamed molded body, wherein the foamed molded body has an expansion ratio of 2.0 or more;
   the method comprises a feeding step, a parison forming step, and a molding step;
   in the feeding step, raw material resin is fed into an internal space of a cylinder of an extruder through a hopper;
   in the parison forming step, a foamed parison is formed by extruding, from a head, a molten foaming agent-containing resin obtained by melt-kneading the raw material resin and a foaming agent in the internal space;
   in the molding step, the foamed parison is molded using a mold to form a foamed molded body;
   the raw material resin comprises 50 mass% or more of a polyethylene-based resin;
   the head comprises a die core and a die shell surrounding the die core;
   the foamed parison is formed by the foaming agent-containing resin flowing through a flow path between the die core and the die shell and being extruded from the head through an annular slit;
   in a tip area within a range of 20 mm in a vertical direction from the annular slit, the die core and the die shell have a die core side flow path forming surface and a die shell side flow path forming surface, respectively; and
   an angle between the die core side flow path forming surface and the die shell side flow path forming surface is 3.0 degrees or more.
[5] The method of [4], wherein
   in the tip area, the die shell side flow path forming surface has an inclination angle of 45 degrees or more with respect to a horizontal plane.
[6] The method of any one of [1] to [5], wherein resin constituting the foamed molded body contains 80 mass% or more of polyethylene-based resin

### [Brief Description of Drawings]

Fig. 1A is a structural diagram of a molding device 100 of one embodiment of the present invention. Fig. 1B is a cross-sectional view of B-B in Fig. 1A.
Fig. 2 is a cross-sectional view showing the structure of a pulverizer 15.
Fig. 3 is a perspective view of the screen mesh 15a in Fig. 2.
Fig. 4A is an enlarged cross-sectional view of the vicinity of the tip of the head 12 in Fig. 1. Fig. 4B is an enlarged view of region B in Fig. 4A.
Fig. 5 is a cross-sectional view showing the state after the split molds 14a and 14b are closed and the foamed parison 13 is blow molded to form the foamed molded body 18.
Fig. 6A is a perspective view showing the foamed molded product main body 18b obtained by removing the burr 18c from the foamed molded body 18. Fig. 6B is a perspective view showing the foamed molded product 18a obtained by removing the bag portion 18d from the foamed molded product main body 18b.

### [Description of Embodiments]

Embodiments of the present invention will be described below. Various features described in the following embodiments can be combined with each other. In addition, the invention can be established independently for each feature.

The following embodiments relate to the first and second aspects. However, technical matters related to the first aspect are optional in the second aspect, and technical matters related to the second aspect are optional in the first aspect.

### 1. Molding Device 100

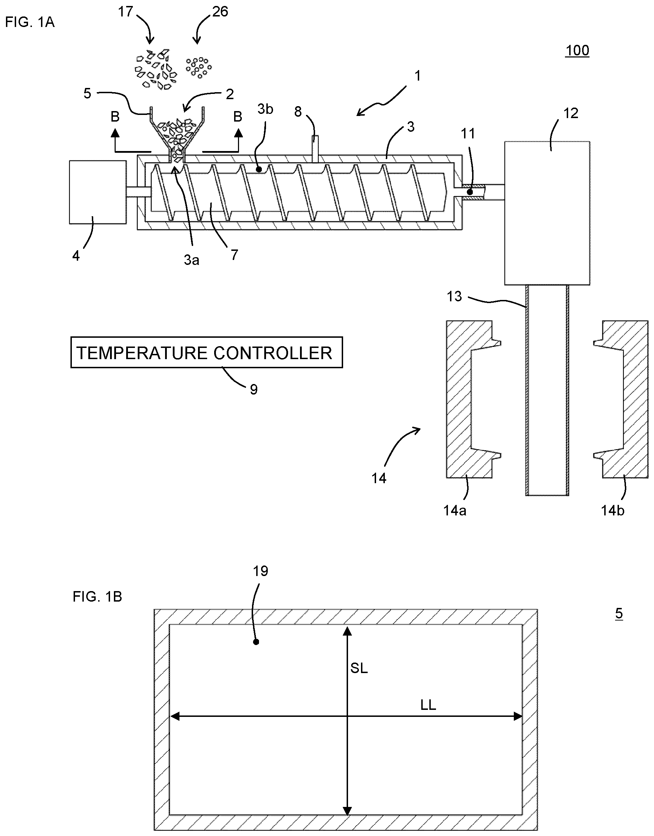

In one example, a method for manufacturing a foamed molded body 18 of one embodiment of the present invention can be carried out using a molding device 100 including an extruder 1, a head 12, and a mold 14 shown in Fig. 1. The extruder 1 includes a cylinder 3, a hopper 5, a screw 7, a foaming agent injection section 8, a temperature controller 9, and a resin extrusion port 11.

First, the raw material resin 2 used in the manufacture of the foamed molded body 18 will be described below, followed by the molding device 100.

### <Raw Material Resin 2>

The raw material resin 2 contains 50 mass% or more of polyethylene-based resin. The proportion of polyethylene-based resin in the raw material resin 2 is, for example, 50 to 100 mass%, preferably 80 to 100 mass%, and specifically, for example, 50, 55, 60, 65, 70, 75, 80, 85, 90, 95, or 100 mass%, or may be in the range between any two of the numerical values exemplified here.

Polyethylene-based resin is a resin in which 80 mass% (preferably 85, 90, or 95 mass%) or more of the monomer units are polyethylene. Examples of polyethylene-based resins include ethylene homopolymers, ethylene copolymers which are copolymers of ethylene and other olefins (e.g., α-olefins such as 1-butene), and acid-modified polyethylene. Examples of ethylene homopolymers include high-density polyethylene (HDPE) and low-density polyethylene (LDPE). Examples of ethylene copolymers include linear low-density polyethylene (LLDPE). The proportion of other olefin units in the ethylene copolymer is, for example, 1 to 20 mass%, specifically, for example, 1, 2, 3, 4, 5, 6, 7, 8, 9, 10, 15, and 20 mass%, and may be in the range between any two of the numerical values exemplified here. For example, when the total of HDPE and LDPE is 100 mass%, the proportion of HDPE in the polyethylene-based resin in the raw material resin 2 is preferably 20 to 60 mass%, and more preferably 30 to 50 mass%. The density of HDPE is, for example, 0.941 g/cm³ or more, and the density of LDPE is 0.910 to 0.940 g/cm³.

The resin other than the polyethylene-based resin in the raw material resin 2 may be a polyolefin other than the polyethylene-based resin, and examples of such polyolefins include polypropylene (homopolypropylene, random polypropylene, block polypropylene, etc.). In addition to the resin, the raw material resin 2 may contain various additives such as a foaming nucleating agent (e.g., baking soda and citric acid), an antioxidant, and a colorant.

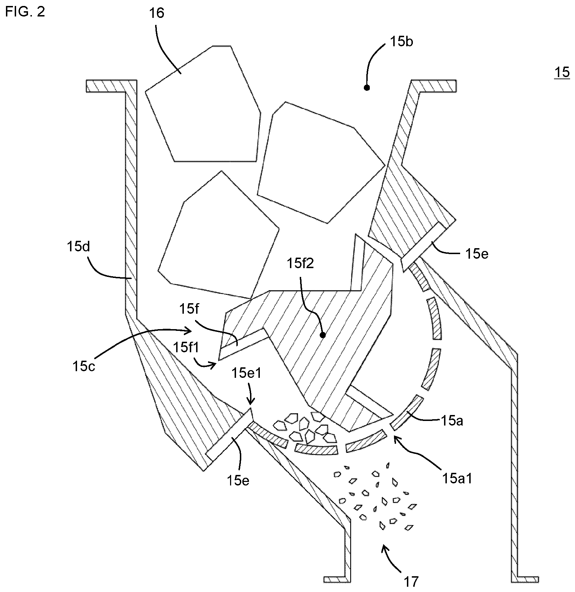

In the first aspect of the invention, as shown in Figs. 1 and 2, the raw material resin 2 includes a pulverized material 17 produced by pulverizing the foamed body 16 using a pulverizer 15. It is preferable that the particles constituting the pulverized material 17 are irregular in shape and size. The ratio of the pulverized material 17 in the raw material resin 2 is, for example, 50 to 100 mass%, preferably 85 to 95 mass%, and specifically, for example, 50, 55, 60, 65, 70, 75, 80, 85, 90, 95, or 100 mass%, and may be in the range between any two of the values exemplified here. The resin in the raw material resin 2 other than the pulverized material 17 is preferably a virgin resin 26. The virgin resin 26 is preferably in the form of pellets, and the pellet diameter is, for example, 1 to 6 mm. In this case, the raw material resin 2 is obtained by mixing the pulverized material 17 and the virgin resin 26.

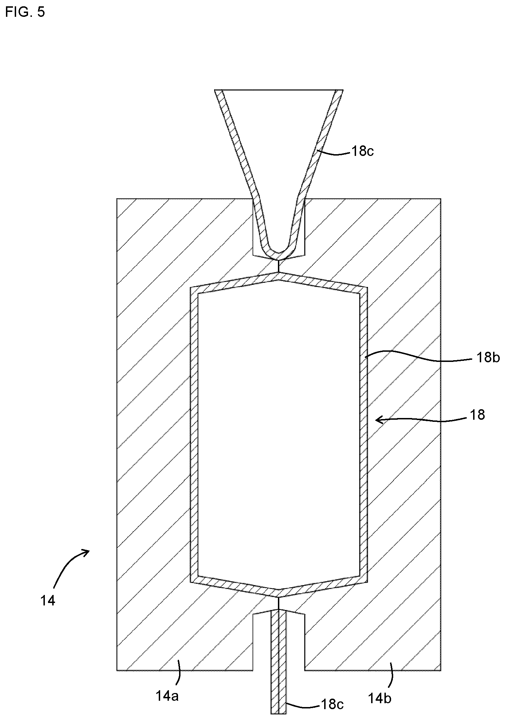

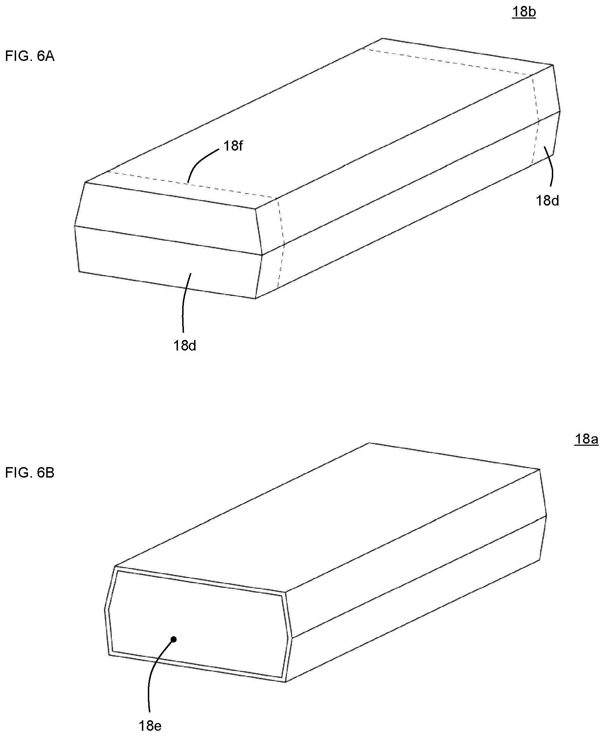

An example of the foamed body 16 is a scrap generated in the previous production of the foamed molded product 18a shown in Fig. 6B. Examples of scraps include offcuts (such as burrs 18c and bag portions 18d cut off to form openings 18e) generated when processing foamed molded body 18 into the desired foamed molded product 18a, as shown in Figs. 5 and 6, and foamed molded products 18a that have failed inspection. In this case, the foamed body 16 has the same composition and expansion ratio as the foamed molded body 18. The composition and/or expansion ratio of the foamed body 16 may be different from that of the foamed molded body 18. For example, when using scrap generated in the manufacture of a foamed molded body having a different composition and/or expansion ratio from that of the foamed molded body 18 manufactured in this embodiment, the composition and/or expansion ratio of foamed body 16 is different from that of the foamed molded body 18.

The foamed body 16 is made of a resin containing 50 mass% or more of polyethylene-based resin, and has an expansion ratio of 2.0 or more. The explanation of this resin is the same as that of the raw material resin 2. The expansion ratio is preferably 3.2 or more, and more preferably 3.5 or more. Specifically, for example, the expansion ratio is 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 5.0, 5.5, or 6.0, and may be in the range between any two of the numerical values exemplified here or any one or more of the numerical values exemplified here. The inventors have found that clogging of the hopper 5 tends to occur when the foamed body 16 used to manufacture the pulverized material 17 has such a composition and expansion ratio, and therefore the technical significance of applying the present invention is particularly significant when the foamed body 16 has such a composition and expansion ratio. Examples of the reason why clogging of the hopper 5 tends to occur when the foamed body 16 has the above composition and expansion ratio are that the polyethylene-based resin is softer than the polypropylene-based resin, so that the pulverized material 17 tends to stick together, and that the downward force applied to the pulverized material 17 tends to be insufficient due to the high expansion ratio.

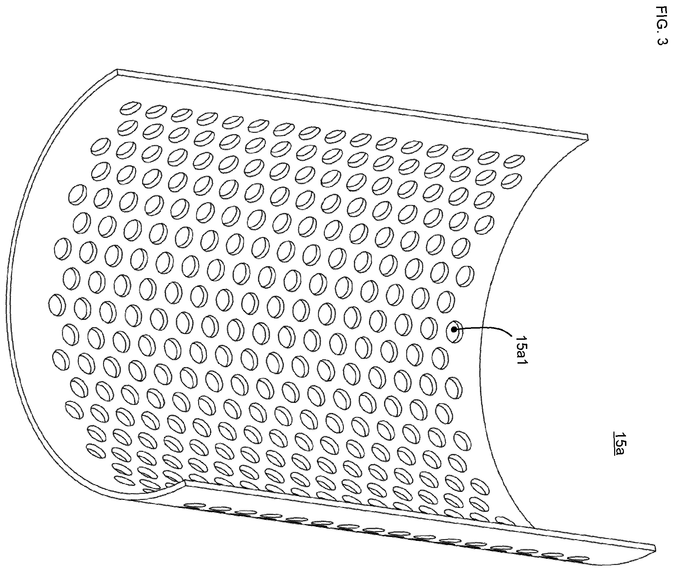

As shown in Figs. 2 and 3, the pulverizer 15 is preferably configured to discharge the pulverized material 17 from the pulverizer 15 through an opening 15a1 provided in the screen mesh 15a. The diameter of the opening 15a1 is preferably 8.0 mm or less, more preferably 7.5 mm or less or 7.0 mm or less. In this case, as shown in the examples described later, the occurrence of clogging in the hopper 5 can be suppressed. The lower limit of the diameter of the opening 15a1 is not particularly specified, but is, for example, 3.0 mm. By not making the diameter of the opening 15a1 too small, the time required for pulverization is suppressed from becoming too long. Specifically, the diameter of the opening 15a1 is, for example, 3.0, 3.5, 4.0, 4.5, 5.0, 5.5, 6.0, 6.5, 7.0, 7.5, 8.0 mm, and may be in the range between any two of the numerical values exemplified here. The pitch for forming the openings 15a1 (i.e., the center-to-center distance between adjacent openings 15a1) is preferably the diameter of the opening 15a1 x P. P is, for example, 1.1 to 2, preferably 1.3 to 1.7, specifically, for example, 1.1, 1.2, 1.3, 1.4, 1.5, 1.6, 1.7, 1.8, 1.9, 2.0, and may be in the range between any two of the numerical values exemplified here.

In addition, when the opening 15a1 is not circular, the "diameter" means the equivalent circle diameter. It is preferable that a plurality of openings 15a1 are provided in the screen mesh 15a. It is preferable that the diameters of the plurality of openings 15a1 are the same. When the diameters of the plurality of openings 15a1 are different from each other, it is preferable that the ratio of the openings 15a1 having a diameter of 8.0 mm (preferably 7.5 or 7.0 mm) or less is 50% or more, and more preferably 80% or more. Specifically, this ratio may be, for example, 50, 55, 60, 65, 70, 75, 80, 85, 90, 95, or 100%, or may be in a range between any two of the numerical values exemplified here. In addition, it is preferable that the average diameter of the plurality of openings 15a1 is 8.0 mm (preferably 7.5 or 7.0 mm) or less, and it is even more preferable that the maximum diameter of the plurality of openings 15a1 is 8.0 mm (preferably 7.5 or 7.0 mm) or less. The above explanation regarding the diameter of the openings 15a1 is also applicable to this average or maximum value.

In one example, the pulverizer 15 includes an input section 15b, a pulverizing section 15c, and the screen mesh 15a. The foamed body 16 fed from the input section 15b is pulverized in the pulverizing section 15c to become a pulverized material 17, which is discharged from the pulverizer 15 through the screen mesh 15a. In one example, the pulverizing section 15c includes a fixed blade 15e fixed to the housing 15d and a rotating blade 15f that rotates around a rotating shaft 15f2. The rotating shaft 15f2 is, for example, a shaft extending in the horizontal direction. The edges 15e1 and 15f1 of the fixed blade 15e and the rotating blade 15f preferably extend along the axial direction of the rotating shaft 15f2 (perpendicular to the paper surface of Fig. 2). The gap between the edges 15e1 and 15f1 when the edges 15e1 and 15f1 are closest to each other is, for example, 0.3 to 2.0 mm, and preferably 0.5 to 1.2 mm. Specifically, this gap may be, for example, 0.3, 0.4, 0.5, 0.6, 0.7, 0.8, 0.9, 1.0, 1.1, 1.2, 1.3, 1.4, 1.5, or 2.0 mm, or may be in a range between any two of the numerical values exemplified here.

With this configuration, as the rotating blade 15f rotates, a shear force is applied to the foamed body 16 by the fixed blade 15e and the rotating blade 15f, cutting the foamed body 16. When the foamed body 16 is cut to a size that can pass through the opening 15a1, it is discharged through the opening 15a1 and becomes pulverized material 17. To increase the pulverizing efficiency, it is preferable to provide two or more fixed blades 15e and two or more rotating blades 15f.

As shown in Fig. 2, it is preferable that the screen mesh 15a has an arc shape in a cross section perpendicular to the rotating shaft 15f2, and it is even more preferable that the center of the arc coincides with the rotating shaft 15f2. In this case, the edge of the rotating blade 15f moves concentrically with the inner surface of the screen mesh 15a, so that the foamed body 16, which has been cut and broken into small pieces by the fixed blade 15e and the rotating blade 15f, is transported along the inner surface of the screen mesh 15a by the rotating blade 15f. With this configuration, the foamed body 16, which has become small enough to pass through the opening 15a1, is easily discharged through the opening 15a1 quickly. The gap between the inner surface of the screen mesh 15a and the edge of the rotating blade 15f is, for example, 1 to 10 mm, and preferably 2 to 7 mm. Specifically, the gap may be, for example, 1.0, 2.0, 2.5, 3.0, 3.5, 4.0, 4.5, 5.0, 5.5, 6.0, 6.5, 7.0, 8.0, 9.0, or 10.0 mm, or may be in a range between any two of the numerical values exemplified here. If the gap is too large, the foamed body 16 cut into small pieces will be difficult to transport by the rotating blade 15f and difficult to discharge through the opening 15a1.

### <Hopper 5>

The hopper 5 is connected to the internal space 3b of the cylinder 3 through the opening 3a provided on the side of the cylinder 3, and the raw material resin 2 is introduced from the hopper 5 into the internal space 3b. The raw material resin 2 is heated in the internal space 3b and melted into a molten state. In addition, the rotation of the screw 7 disposed in the internal space 3b transports the molten resin toward the resin extrusion port 11 provided at the tip of the internal space 3b.

As shown in Fig. 1B, the opening area of the passage 19 through which the raw material resin 2 fed into the hopper 5 passes (the area at the portion where the area of the passage 19 in the horizontal cross section is the smallest) is preferably, for example, 50 to 500 cm², and more preferably 150 to 400 cm². Specifically, this area may be, for example, 50, 100, 150, 200, 250, 300, 350, 400, 450, or 500 cm², or may be in the range between any two of the values exemplified here. The shape of the passage 19 is not particularly limited, but in one example, it is preferably a flat shape such as a rectangle, an oval, or an ellipse. An "oval" is a shape of an outer edge of the trajectory when a circle moves in parallel. Here, the direction parallel to the rotating shaft of the screw 7 is the long axis direction, and the direction perpendicular to the long axis direction on a horizontal plane is the short axis direction. The length of the passage 19 in the long axis direction at the part where the length of the passage 19 is maximum in the long axis direction is LL, and the length of the passage 19 in the short axis direction at the part where the length of the passage 19 is maximum in the short axis direction is SL.

LL is, for example, 10 to 40 cm, preferably 15 to 25 cm, and specifically, for example, 10, 15, 20, 25, 30, 35, or 40 cm, and may be in a range between any two of the numerical values exemplified here. SL is, for example, 4 to 15 cm, preferably 6 to 12 cm, and specifically, for example, 4, 5, 6, 7, 8, 9, 10, 11, 12, 13, 14, or 15 cm, and may be in a range between any two of the numerical values exemplified here. LL/SL is, for example, 1.2 to 4.0, preferably 1.5 to 2.5, and specifically, for example, 1.2, 1.5, 2.0, 2.5, 3.0, 3.5, 4.0, and may be in the range between any two of the numerical values exemplified here.

When the passage 19 has such a shape, clogging of the raw material resin 2 tends to occur, so the technical significance of applying the present invention is remarkable.

### <Screw 7>

The screw 7 is disposed in the internal space 3b of the cylinder 3, and conveys the molten resin toward the resin extrusion port 11 while kneading it by its rotation. A motor 4 is provided at one end of the screw 7. The motor 4 drives the screw 7 to rotate, and can also control the rotation speed.

### <Foaming Agent Injection Section 8>

The foaming agent injection section 8 is a section for injecting a foaming agent into the cylinder 3. The position where the foaming agent injection section 8 is provided is not particularly limited, but assuming that the position of the end of the internal space 3b of the cylinder 3 on the hopper 5 side is 0 and the position of the end on the resin extrusion port 11 side is L, the foaming agent injection section 8 is preferably provided at a position of 0.3L to 0.7L (preferably 0.4 to 0.6L). If the foaming agent injection section 8 is provided closer to the hopper 5 than 0.3L, the foaming agent may be injected in a state where the molten resin is not sufficiently kneaded, resulting in insufficient dispersion of the foaming agent. In addition, since the temperature of the molten resin is usually controlled so as to gradually decrease toward the resin extrusion port 11, if the foaming agent injection section 8 is provided closer to the resin extrusion port 11 than 0.7L, the temperature of the molten resin at the site where the foaming agent is injected may be too low, resulting in a decrease in the amount of foaming agent injected.

The foaming agent injected from the foaming agent injection section 8 may be a physical foaming agent, a chemical foaming agent, or a mixture thereof, but a physical foaming agent is preferred. Examples of physical foaming agents include inorganic physical foaming agents such as air, carbon dioxide gas, nitrogen gas, and water, and organic physical foaming agents such as butane, pentane, hexane, dichloromethane, and dichloroethane, as well as supercritical fluids thereof. Supercritical fluid is preferably produced using carbon dioxide, nitrogen, or the like. For nitrogen, it is obtained by setting the temperature and pressure to a temperature of - 149. 1°C or more and a pressure of 3.4 MPa or more, which are its critical temperature and pressure, respectively. For carbon dioxide, it is obtained by setting the temperature and pressure to 31°C or more and 7.4 MPa or more, which are its critical temperature and pressure, respectively. Examples of chemical foaming agents include those that generate carbon dioxide gas by a chemical reaction between an acid (e.g., citric acid or a salt thereof) and a base (e.g., sodium bicarbonate). The foaming agent injection section 8 may be an opening that communicates with the hopper 5.

### <Temperature Controller 9>

The temperature controller 9 is configured to individually control a plurality of temperature control units provided in the cylinder 3 and the head 12 to control the temperature of each part.

### <Head 12/Mold 14>

The foaming agent-containing resin in a molten state obtained by melt-kneading the raw material resin 2 and the foaming agent in the internal space 3b is extruded from the resin extrusion port 11 and injected into the head 12. The head 12 has a slit, and the foaming agent-containing resin is extruded from the slit to form the foamed parison 13. The shape of the slit is not particularly limited, but may be, for example, annular or linear (e.g., straight). If the slit is annular, a cylindrical foamed parison is obtained. If the slit is linear (e.g., if the head 12 is a T-die), a sheet-shaped foamed parison is obtained. Note that the foaming agent-containing resin extruded from the resin extrusion port 11 may be stored in a certain amount in an accumulator (not shown), and then the accumulator plunger may be operated to extrude it from the head 12 to form the foamed parison 13. In this case, the extrusion speed of the foamed parison 13 can be increased, which has the advantage of stabilizing the foamed state of the foamed parison 13. The extrusion speed of the foaming agent-containing resin is preferably 250 to 1250 g/sec, and specifically, for example, 250, 300, 350, 400, 450, 500, 550, 600, 650, 700, 750, 800, 850, 900, 950, 1000, 1050, 1100, 1150, 1200, and 1250 g/sec, and may be in the range between any two of the values exemplified here.

The foamed parison 13 is molded in a mold 14. The mold 14 is preferably an openable and closable split molds 14a, 14b, and the foamed parison 13 is guided to the space between the split molds 14a, 14b. The foamed molded body 18 is obtained by molding the foamed parison 13 using the mold 14. The foamed molded body 18 is preferably hollow. The molding method using the mold 14 is not particularly limited, and may be blow molding, in which air is blown into the cavity of the mold 14 to mold the foamed parison 13, or vacuum molding, in which the pressure inside the cavity of the mold 14 is reduced from the inner surface of the cavity to mold the foamed parison 13, or a combination of these.

Explanation of the composition of the foamed molded body 18 is the same as that of the raw material resin 2. The expansion ratio of the foamed molded body 18 is the same as that of the foamed body 16. The average thickness of the foamed molded body 18 is, for example, 1 to 5 mm, and preferably 2 to 4 mm.

### <Foamed Molded Body 18>

The inventor, upon observing the inner surface of a hollow foamed molded body 18 which is made of a resin containing 50 mass% or more of polyethylene-based resin and has an expansion ratio of 2.0 or more, noticed that an unintended striped uneven shape tends to be formed. Such uneven shapes are undesirable when air flows inside the foamed molded body 18 like a duct, as they lead to increased flow resistance and noise. Such uneven shapes do not occur in the mass production of polypropylene-based foamed molded bodies or in polyethylene-based foamed molded bodies with a low expansion ratio, so they are a unique phenomenon that occurs in the manufacture of polyethylene-based foamed molded bodies with a high expansion ratio.

In order to suppress the occurrence of such a phenomenon, the inventor conducted extensive research and found that the occurrence of the above phenomenon can be suppressed by devising the configuration of the head 12 for forming the foamed parison 13, leading to the completion of the invention of the second aspect. The head 12 of the invention of this aspect will be described below.

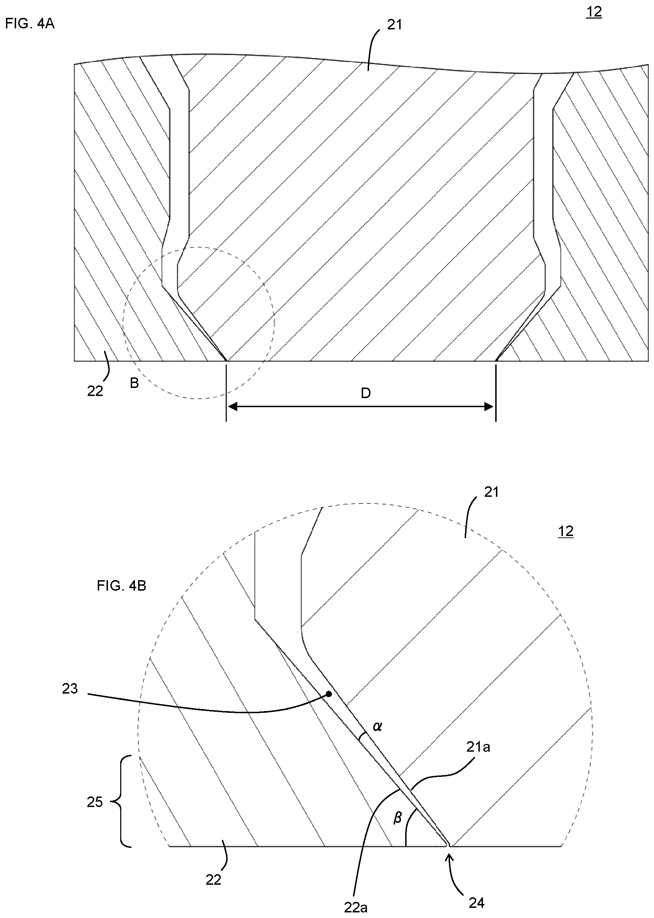

Of this aspect of the invention, as shown in Fig. 4, the head 12 comprises a die core 21 and a die shell 22 surrounding it. The foaming agent-containing resin that flows through the flow path 23 between the die core 21 and the die shell 22 is extruded from the head 12 through the annular slit 24 to form the foamed parison 13.

As shown in Fig. 4, in the tip area 25 within a range of 20 mm in the vertical direction from the annular slit 24, the die core 21 and the die shell 22 have a die core side flow path forming surface 21a and a die shell side flow path forming surface 22a, respectively. The gap angle α between the die core side flow path forming surface 21a and the die shell side flow path forming surface 22a is 3.0 degrees or more. As shown in the examples described below, when the head 12 of the molding device in which the above-mentioned unintended striped unevenness occurred was checked, it was confirmed that the gap angle α between the die core side flow path forming surface 21a and the die shell side flow path forming surface 22a was smaller than 3.0 degrees, and that by increasing this angle, the striped unevenness was suppressed.

The gap angle α is, for example, 3.0 to 45 degrees, preferably 3.3 to 30 degrees, and specifically, for example, 3.0, 3.1, 3.2, 3.3, 3.4, 3.5, 3.6, 3.65, 3.7, 3.8, 3.9, 4.0, 5.0, 6.0, 7.0, 8.0, 9.0, 10, 15, 20, 25, 30, 35, 40, and 45 degrees, and may be in the range between any two of the numerical values exemplified here or any one or more of the numerical values exemplified here. If this angle is 3.0 degrees or more, pulsation when the foaming agent-containing resin is extruded from the head 12 is suppressed, and the occurrence of striped unevenness is suppressed.

In the tip area 25, the die shell side flow path forming surface 22a preferably has an inclination angle β of 45 degrees or more with respect to the horizontal plane. In this case, the occurrence of striped unevenness is further suppressed. The inclination angle β is, for example, 45 to 85 degrees, and specifically, for example, 45, 49.4, 50, 55, 60, 65, 70, 75, 80, or 85 degrees, and may be in the range between any two of the numerical values exemplified here or any one or more of the numerical values exemplified here. It is preferable that the die core side flow path forming surface 21a is inclined so that the die core 21 is tapered.

The diameter D of the die core 21 at the height where the annular slit 24 is provided is, for example, 50 to 300 mm, and preferably 100 to 200 mm. Specifically, the diameter D may be, for example, 50, 100, 110, 120, 130, 140, 150, 160, 170, 180, 190, 200, 250, or 300 mm, or may be in a range between any two of the values exemplified here.

The width of the annular slit 24 can be adjusted by changing the height position of the die core 21 relative to the die shell 22. For example, the width of the annular slit 24 can be increased by raising the die core 21 relative to the die shell 22. The width of the annular slit 24 is appropriately set to obtain a foamed molded body 18 with a desired thickness.

### 2. Method for Manufacturing Foamed Molded Body

A method for manufacturing a foamed molded body of one embodiment of the present invention will be described. The method of this embodiment includes a feeding step, a parison forming step, and a molding step.

### <Feeding Step>

In the feeding step, the raw material resin 2 is fed into the internal space 3b of the cylinder 3 of the extruder 1 through the hopper 5. By containing the above-mentioned pulverized material 17 in the raw material resin 2, clogging of the raw material resin 2 is suppressed, and mass production efficiency is improved.

### <Parison Forming Step>

In the parison forming step, as shown in Figs. 1 and 4, the foaming agent-containing resin in a molten state obtained by melt-kneading the raw material resin 2 and the foaming agent in the internal space 3b is extruded from the head 12 to form a foamed parison 13. As described above, by forming the foamed parison 13 using the head 12 in which the angle between the die core side flow path forming surface 21a and the die shell side flow path forming surface 22a is 3.0 degrees or more, it is possible to prevent striped unevenness from being formed on the inner surface of the foamed molded body 18.

### <Molding Step>

In the molding step, as shown in Fig. 5, the foamed parison 13 is molded using the mold 14 to form the foamed molded body 18.

The foamed molded body 18 is so configured that the foamed molded product main body 18b, which is a portion inside the cavity of the mold 14, and the burr 18c, which is a portion outside the cavity of the mold 14 are connected to each other, and by removing the burr 18c from the foamed molded body 18, the foamed molded product main body 18b shown in Fig. 6A is obtained. Next, the bag portion 18d provided in the foamed molded product main body 18b is cut along the dotted line 18f as necessary to form an opening, and the desired foamed molded product (e.g., foamed duct) 18a can be obtained as shown in Fig. 6B. If post-processing such as forming an opening is not required for the foamed molded product main body 18b, the foamed molded product main body 18b may be used as the foamed molded product 18a as is.

In the mass production process of the foamed molded product 18a, scraps are generated, which are made up of scraps (burr 18c, bag portion 18d, etc.) generated when processing the foamed molded body 18 taken out from the mold 14 into the desired foamed molded product 18a, and foamed molded products 18a that have failed inspection. This scrap is fed into the pulverizer 15 as the foamed body 16 and pulverized to obtain the pulverized material 17. The pulverized material 17 can be fed into the hopper 5 as the raw material resin 2 as it is or mixed with a virgin resin. According to the above method, it is possible to efficiently mass-produce high-quality foamed molded bodies 18 by utilizing scraps generated in the previous process.

### [Examples]

### 1. Comparative Example 1

Using an apparatus for manufacturing foamed molded bodies shown in Fig. 1, a foamed molded body 18 with an expansion ratio of 4.0 was manufactured. The raw material resin 2 used was a mixture of a virgin resin and a pulverized material 17 in a mass ratio of 1:9. The virgin resin is composed of HDPE/LDPE/foaming nucleating agent (sodium bicarbonate & citric acid type)/antioxidant/black master batch in a mass ratio of 40/60/1/4/1. The pulverized material 17 was manufactured by pulverizing scraps generated in the previous manufacture of the foamed molded body 18 using pulverizer 15. The diameter of the opening 15a1 of the screen mesh 15a of the pulverizer 15 was 9.0 mm, and the pitch of the opening 15a1 was 13.0 mm.

The horizontal cross-sectional shape of the passage 19 through which the raw material resin 2 fed into the hopper 5 passes is an oval, with a long axis length LL of 300 mm and a short axis length SL of 100 mm.

The temperature controller 9 was set so that the temperature of the foamed parison 13 would be 190 to 200°C. N₂ gas was used as the foaming agent, and it was injected from the foaming agent injection section 8 located at the 0.5L position. The expansion ratio was adjusted by changing the amount of injected gas. A certain amount of the foaming agent-containing resin extruded from the resin extrusion port 11 of the extruder 1 was stored in an accumulator (not shown), and then the plunger of the accumulator was operated to extrude it from the head 12 to form the foamed parison 13. The extrusion speed of the foaming agent-containing resin was set to 554 g/sec. The head 12 used had a die core 21 with a diameter of 120 mm, a gap angle α of 2.26 degrees, and an inclination angle β of 41.8 degrees.

The foamed molded body 18 was manufactured by blow molding using the foamed parison 13 formed under the above conditions. In addition, the foamed molded body 18 was repeatedly manufactured using scraps generated during the manufacture of the foamed molded body 18.

Under the above conditions, the raw material resin 2 frequently clogged the passage 19, and it was necessary to clear the clog each time, resulting in poor mass production efficiency. In addition, a striped uneven shape was formed on the inner surface of the foamed molded body 18.

### 2. Example 1

The foamed molded body 18 was repeatedly manufactured in the same manner as in Comparative Example 1, except that the diameter of the openings 15a1 in the screen mesh 15a was 7.0 mm, the pitch of the openings 15a1 was 10.5 m, and the head 12 used had a die core 21 with a diameter of 140 mm, a gap angle α of 3.65 degrees, and an inclination angle β of 49.4 degrees.

Under the above conditions, the phenomenon in which the raw material resin 2 clogged the passage 19 hardly occurred, and mass production efficiency was excellent. In addition, no striped unevenness was formed on the inner surface of the foamed molded body 18.

### [Explanation of symbols]

1: extruder, 2: raw material resin, 3: cylinder, 3a: opening, 3b: internal space, 4: motor, 5: hopper, 7: screw, 8: foaming agent injection section, 9: temperature controller, 11: resin extrusion port, 12: head, 13: foamed parison, 14: mold, 14a: split mold, 14b: split mold, 15: pulverizer, 15a: screen mesh, 15a1: opening, 15b: input section, 15c: pulverizing section, 15d: housing, 15e: fixed blade, 15e1: edge, 15f: rotating blade, 15f1: edge, 15f2: rotating shaft, 16: foamed body, 17: pulverized material, 18: foamed molded body, 18a: foamed molded product, 18b: foamed molded product main body, 18c: burr, 18d: bag portion, 18e: opening, 18f: dotted line, 19: passage, 21: die core, 21a: die core side flow path forming surface, 22: die shell, 22a: die shell side flow path forming surface, 23: flow path, 24: annular slit, 25: tip area, 26: virgin resin, 100: molding device, α: gap angle, β: inclination angle

## Claims

1. A method for manufacturing a foamed molded body, wherein the foamed molded body has an expansion ratio of 2.0 or more;
the method comprises a feeding step, a parison forming step, and a molding step;
in the feeding step, raw material resin is fed into an internal space of a cylinder of an extruder through a hopper;
in the parison forming step, a foamed parison is formed by extruding, from a head, a foaming agent-containing resin in a molten state obtained by melt-kneading the raw material resin and a foaming agent in the internal space;
in the molding step, the foamed parison is molded using a mold to form a foamed molded body;
the raw material resin comprises 50 mass% or more of a polyethylene-based resin;
the raw material resin comprises a pulverized material produced by pulverizing a foamed body using a pulverizer;
the foamed body is composed of a resin comprising 50 mass% or more of a polyethylene-based resin and has an expansion ratio of 2.0 or more;
the pulverizer is configured to discharge the pulverized material from the pulverizer through an opening provided in a screen mesh; and
a diameter of the opening is 8.0 mm or less.

2. The method of claim 1, wherein
the expansion ratios of the foamed molded body and the foamed body are each 3.2 or more.

3. The method of claim 1, wherein
the head comprises a die core and a die shell surrounding the die core;
the foamed parison is formed by the foaming agent-containing resin flowing through a flow path between the die core and the die shell and being extruded from the head through an annular slit;
in a tip area within a range of 20 mm in a vertical direction from the annular slit, the die core and the die shell have a die core side flow path forming surface and a die shell side flow path forming surface, respectively; and
an angle between the die core side flow path forming surface and the die shell side flow path forming surface is 3.0 degrees or more.

4. A method for manufacturing a foamed molded body, wherein the foamed molded body has an expansion ratio of 2.0 or more;
the method comprises a feeding step, a parison forming step, and a molding step;
in the feeding step, raw material resin is fed into an internal space of a cylinder of an extruder through a hopper;
in the parison forming step, a foamed parison is formed by extruding, from a head, a molten foaming agent-containing resin obtained by melt-kneading the raw material resin and a foaming agent in the internal space;
in the molding step, the foamed parison is molded using a mold to form a foamed molded body;
the raw material resin comprises 50 mass% or more of a polyethylene-based resin;
the head comprises a die core and a die shell surrounding the die core;
the foamed parison is formed by the foaming agent-containing resin flowing through a flow path between the die core and the die shell and being extruded from the head through an annular slit;
in a tip area within a range of 20 mm in a vertical direction from the annular slit, the die core and the die shell have a die core side flow path forming surface and a die shell side flow path forming surface, respectively; and
an angle between the die core side flow path forming surface and the die shell side flow path forming surface is 3.0 degrees or more.

5. The method of claim 4, wherein
in the tip area, the die shell side flow path forming surface has an inclination angle of 45 degrees or more with respect to a horizontal plane.

6. The method of any one of claims 1 to 5, wherein resin constituting the foamed molded body contains 80 mass% or more of polyethylene-based resin.
